# FASCICULE DE BREVET EUROPEEN

(11) **EP 2 844 860 B1**
(45) Date de publication et mention de la délivrance du brevet: **09.03.2016**
(21) Numéro de dépôt: 13723892.9
(22) Date de dépôt: 02.05.2013
(51) Int. Cl.: B64D 33/04, H02P 3/22, F02K 1/76

(54) **SYSTÈME DE COMMANDE POUR INVERSEUR DE POUSSÉE**
STEUERSYSTEM FÜR EINEN SCHUBUMKEHRER
CONTROL SYSTEM FOR A THRUST REVERSER

(30) Priorité: 04.05.2012 FR 1254099
(43) Date de publication de la demande: 11.03.2015
(73) Titulaire: Aircelle, 76700 Gonfreville L'Orcher (FR)
(72) Inventeur: MAALIOUNE, Hakim, F-78630 Orgeval (FR); NOURRISSON, Alain, F-78630 Orgeval (FR)
(74) Mandataire: Gaillarde, Frédéric F. Ch.
(86) Numéro de dépôt international: PCT/FR2013/050969
(87) Numéro de publication internationale: WO 2013/164546

(56) Documents cités:
- WO-A1-2012/052552
- FR-A1- 2 872 223
- US-A1- 2003 159 429

## Description

La présente invention concerne un système de commande pour inverseur de poussée à éléments déplaçables d'une nacelle d'un aéronef. L'invention concerne également une nacelle comportant un tel système.

Un avion est mû par plusieurs turboréacteurs logés chacun dans une nacelle abritant également un ensemble de dispositifs d'actionnement annexes lié à son fonctionnement et assurant diverses fonctions lorsque le turboréacteur est en fonctionnement ou à l'arrêt.

Ces dispositifs d'actionnement annexes comprennent, notamment, un système mécanique d'inversion de poussée.

Plus précisément, une nacelle présente généralement une structure tubulaire comprenant une entrée d'air en amont du turboréacteur, une section médiane destinée à entourer une soufflante du turboréacteur, une section aval abritant les moyens d'inversion de poussée et destinés à entourer la chambre de combustion de turboréacteur et, généralement terminée par une tuyère d'éjection située en aval du turboréacteur.

Cette nacelle est destinée à abriter un turboréacteur double flux apte à générer par l'intermédiaire des pales de la soufflante en rotation un flux d'air chaud, issu de la chambre de la combustion du turboréacteur, et un flux d'air froid qui circule à l'extérieur du turboréacteur à travers une veine annulaire.

Le dispositif d'inversion de poussée est, lors de l'atterrissage de l'aéronef, destiné à améliorer la capacité de freinage de celui-ci en redirigeant vers l'avant au moins une partie de la poussée générée par le turboréacteur.

Dans cette phase, le dispositif d'inversion de poussée obstrue la veine de flux d'air froid et dirige ce dernier vers l'avant de la nacelle, générant de ce fait une contre-poussée qui vient s'ajouter au freinage des roues de l'aéronef, les moyens mis en oeuvre pour réaliser cette réorientation du flux d'air froid varient suivant le type d'inverseur.

Différents types de dispositifs d'inversion de poussée sont généralement connus.

Un mode de réalisation de ce dernier prévoit qu'il comprend au moins un élément déplaçable entre une position de fermeture et une position d'ouverture coopérant en position d'ouverture à la production de l'inversion de poussée et au moins un ensemble d'organes de manoeuvre électromécaniques pour manoeuvrer l'élément déplaçable entre les positions de fermeture et d'ouverture.

L'élément déplaçable peut être, dans des exemples non limitatifs, un capot de nacelle, des portes et/ou des volets d'inversion en amont ou en aval du capot de la nacelle.

L'ensemble des organes de manoeuvre électromécaniques comporte, quant à lui, essentiellement des actionneurs électriques destinés à actionner les éléments déplaçables et au moins un verrou électrique, appelé verrou primaire destiné à assurer leur maintien en position rétractée et éviter tout déploiement accidentel.

Plus particulièrement, le dispositif d'inversion de poussée est muni de trois lignes de défense de verrouillage.

L'ensemble des organes de manoeuvre électromécaniques pour manoeuvrer les éléments déplaçables entre leurs positions de fermeture et d'ouverture de l'inverseur de poussée sont actionnés par au moins une machine électrique tournante selon la conception du système.

De plus, les verrous sont renforcés par des moyens de freinage mécanique à commande électrique, hydraulique ou autre, voir le document US-A-2003/0159429.

De tels moyens de freinage assurent le blocage de la machine électrique tournante, en cas de perte de contrôle de cette dernière ou de l'organe électromécanique correspondant.

Ces moyens de freinage mécanique sont, notamment, adaptés pour protéger de toute survitesse la machine électrique tournante et, ainsi, de disposer d'une sécurité additionnelle en cas de défaillance de cette machine.

Les moyens de freinage mécanique utilisés peuvent être, par exemple, un frein statique à manque de courant utilisant une technologie de type frein à disques multiples, à rappel par ressort et/ou à commande électrique de déverrouillage par un actionneur linéaire intégré.

Or, en bloquant mécaniquement le moteur à pleine vitesse, il existe un risque d'endommager mécaniquement l'actionneur associé.

De plus, de tels freins mécaniques sont sujets à une usure rapide des disques correspondants.

Par ailleurs, de tels freins mécaniques sont lourds, encombrants, complexes à mettre en oeuvre et souvent couteux.

Un but de la présente invention est de remédier à ces inconvénients.

Un autre but de la présente invention est de proposer un système d'inversion de poussée globalement plus fiable et moins sujet à une usure de ses constituants mécaniques.

Un autre but de la présente invention est d'augmenter la fiabilité des moyens de commande des organes de manoeuvre électromécaniques de la nacelle tout en réduisant la masse et l'encombrement de ces moyens de commande.

Il est également désirable d'éviter toute arrivée violente d'un organe de manoeuvre électromécanique sur des butées ultimes correspondantes.

A cet effet, l'invention propose un système de commande électrique pour inverseur de poussée à éléments déplaçables, le système de commande comprenant au moins un organe électromécanique d'actionnement dudit élément déplaçable, une unité d'entraînement électrique dudit organe d'actionnement, une unité de commande et une unité de contrôle de puissance adaptée pour commander l'unité d'entraînement électrique pour déplacer l'élément déplaçable vers une position de fermeture et/ou vers une position déployée en jet direct et en jet inversé caractérisé en ce que le système de commande comprend un circuit électronique de freinage électrique adapté pour freiner l'unité d'entraînement électrique, en cas de survitesse de cette dernière lors du déplacement de l'élément déplaçable vers la position de fermeture et/ou vers la position déployée.

Grâce à la présente invention, on s'affranchit de tout moyen de freinage mécanique des organes électromécaniques d'actionnement et, plus particulièrement, de tout moyen de freinage possédant une position d'engagement mécanique avec un élément constitutif du moteur et/ou d'un arbre d'entraînement du moteur associé de manière à le bloquer.

Selon des modes particuliers de réalisation de l'invention, un système de commande selon l'invention peut comprendre une ou plusieurs des caractéristiques suivantes, prises isolément ou en combinaison techniquement possibles :
- l'unité de commande est adaptée pour piloter le circuit électronique de freinage électrique lorsque la vitesse de l'unité d'entraînement électrique est supérieure à une vitesse seuil, en mode générateur ou moteur de l'unité d'entraînement électrique ;
- la valeur de la vitesse seuil vseuil est fonction de la position de l'organe électromécanique d'actionnement entraîné par l'unité d'entraînement électrique dans son déplacement vers sa position de fermeture et/ou vers sa position déployée en jet direct et en jet inversé ;
- le circuit électronique de freinage électrique est adapté pour suspendre toute commande de l'unité d'entraînement électrique et pour réguler la vitesse de l'unité d'entraînement électrique de manière à atteindre une consigne de vitesse minimale prédéterminée ;
- le système de commande comprend, en outre, une ou plusieurs butées de fin de course pour l'organe électromécanique d'actionnement dimensionnées pour stopper l'organe électromécanique d'actionnement après que l'unité d'entraînement électrique est atteint la consigne de vitesse minimale;
- le circuit électronique de freinage électrique est commandé tant que la consigne de vitesse minimale n'est pas atteinte par l'unité d'entraînement électrique ;
- le circuit électronique de freinage électrique comprend au moins un dispositif de dissipation d'énergie électrique monté, en série, avec un commutateur à deux états, l'un des deux états étant adapté pour connecter l'unité d'entraînement électrique au dispositif de dissipation d'énergie par l'intermédiaire d'un redresseur dont la tension d'entrée est formée du signal de sortie d'un circuit de puissance de l'unité d'entraînement électrique;
- le dispositif de dissipation d'énergie électrique est une résistance de puissance ;
- le redresseur est un montage à pont de diode et à commutation naturelle.

L'invention concerne également une nacelle comprenant au moins un dispositif électrique et un système de commande tel que précité.

D'autres caractéristiques, buts et avantages de la présente invention, apparaîtront à la lecture de la description détaillée qui va suivre, selon les modes de réalisation donnés à titre d'exemples non limitatifs, et en référence à l'unique dessin annexé sur lequel :

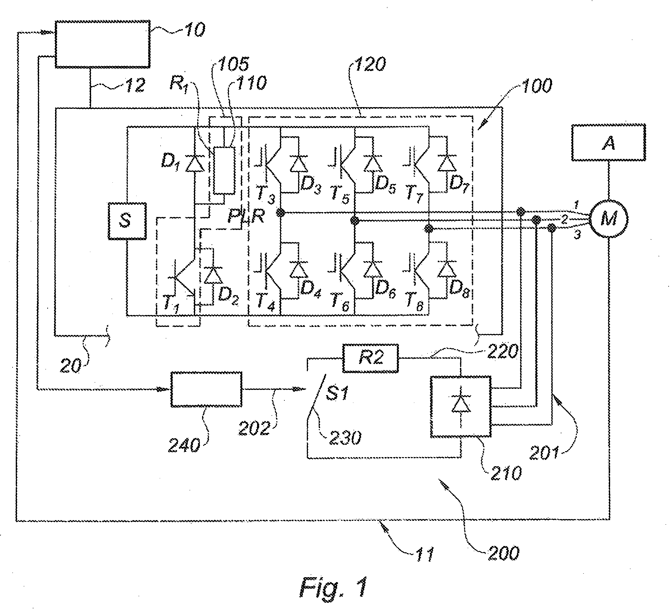

- la figure 1 représente un schéma fonctionnel d'un système de commande électrique d'un dispositif d'inversion de poussée d'un aéronef selon un mode de réalisation de la présente invention ;

De façon classique, un dispositif d'inversion de poussée comprend au moins un élément déplaçable entre une position de fermeture (phase stow en terminologie anglo-saxonne) et une position d'ouverture (phase deploy en terminologie anglo-saxonne) coopérant en position d'ouverture à la production de l'inversion de poussée.

Dans un mode de réalisation non limitatif d'un dispositif d'inversion de poussée à grilles de déviation, les éléments déplaçables sont un capot mobile déplaçable entre, d'une part, une position déployée dans laquelle il ouvre dans la nacelle un passage destiné au flux d'air dévié et, d'autre part, une position d'escamotage dans laquelle il ferme ce passage.

La réorientation du flux d'air est effectuée par des grilles de déviation, associées à des second éléments déplaçables, à savoir des volets d'inversion en amont du capot, le capot n'ayant qu'une simple fonction de coulissage visant à découvrir ou recouvrir ces grilles de déviation.

Les volets d'inversion, quant à eux, forment des portes de blocage pouvant être activées par le coulissement du capot engendrant une fermeture de la veine de flux froid en aval des grilles, de manière à optimiser la réorientation du flux d'air froid.

Il est à noter que le dispositif d'inversion de poussée n'est aucunement limité a celui décrit et peut être tout dispositif d'inversion de poussée connu, notamment un dispositif d'inversion de poussée à portes ou à volets d'inversion en aval du capot de la nacelle.

Le système de commande des éléments déplaçables est actuellement composé d'au moins un ensemble d'organes de manoeuvre électromécaniques pour manoeuvrer les éléments déplaçables entre leurs positions de fermeture et d'ouverture du dispositif d'inversion de poussée.

Ces organes de manoeuvre électromécaniques comporte essentiellement des actionneurs électriques destinés à actionner les éléments déplaçables. Ces actionneurs sont schématisés sur la figure 1 par la lettre A.

Ils sont associés à au moins un verrou électrique, appelé verrou primaire, de retenue de chaque élément déplaçable, à des détecteurs d'état et capteurs des organes de manoeuvre et des éléments déplaçables du dispositif d'inversion de poussée.

Les capteurs peuvent comprendre des capteurs de position et/ou de proximité.

Le dispositif d'inversion de poussée peut comprendre, de façon connue, également, des verrous électriques secondaire et tertiaire.

Par ailleurs, ces actionneurs A électriques sont entraînés par une ou plusieurs unités de puissance d'entraînement, désignée sur la figure 1 par la référence M, couplées aux actionneurs A électriques via un ou plusieurs arbres de transmission flexibles.

Ces unités de puissance d'entraînement comprennent au moins une machine électrique tournante M.

Les machines électriques tournantes M sont associées, en outre, à des détecteurs d'état et capteurs de vitesse, ceci dans le but d'identifier toute perte de contrôle des machines électriques tournantes M.

De plus, selon l'invention, la ségrégation des lignes de défense réalisées par les verrous est complétée par des moyens de freinage électrique d'urgence, en cas de survitesse des machines électriques tournantes M, dues à des défaillances du dispositif et/ou en cas de perte de contrôle de fin de course des moteurs M.

Ces moyens de freinage électrique d'urgence permettent d'éviter tout endommagement du dispositif et tout impact dynamique des actionneurs sur des butées correspondantes.

Ces moyens de freinage électrique d'urgence qui remplacent les moyens de freinage mécanique de l'art antérieur seront décrits plus loin en référence à la figure 1.

Par ailleurs, le système de commande comprend, en outre, au moins un boitier électronique de commande de type ETRAC (acronyme de Electrical Thrust Reverser Actuation Controller en terminologie anglo-saxonne) pour piloter les organes de manoeuvre électromécaniques.

L'ETRAC est une unité de l'ETRAS (acronyme de Electrical Thrust Reverser Actuation System en terminologie anglo-saxonne) qui est relié électriquement à une unité de contrôle moteur de type FADEC (acronyme de Full Authority Digital Engine Control en terminologie anglo-saxonne) destinée à contrôler et surveiller le turboréacteur correspondant.

Dans une variante de réalisation, les actionneurs A sont directement pilotés par le FADEC.

Ce boitier électronique de commande est un calculateur dédié à la nacelle ou une partie de cette dernière (élement déplaçable ou organe de manoeuvre spécifique, par exemple) destiné notamment à traduire les ordres d'ouverture ou de fermeture de l'inverseur de poussée délivrés par le FADEC en des séquences de commande des éléments déplaçables et des organes A de manoeuvre électromécaniques correspondants et, d'autre part, à informer le FADEC de l'état des organes de manoeuvre et de la position des éléments déplaçables.

C'est ainsi que les lois de commande des machines électriques tournantes M sont délivrées par l'unité électronique de commande, désignée par la référence 10 sur la figure, comprise dans l'ETRAS.

Concernant la machine électrique tournante M, c'est un alternateur réversible qui fonctionne en mode alternateur c'est-à-dire comme générateur électrique et en mode démarreur c'est-à-dire en moteur électrique pour entraîner les organes de manoeuvre électromécaniques correspondants via les arbres de transmission.

Ce moteur M peut être tout type de moteur électrique connu et ne sera décrit plus en détails par la suite.

On constate que, compte tenu des temps de déploiement ou de fermeture des éléments déplaçables lors de l'inversion de poussée, le moteur M passe du mode moteur au mode générateur en jet direct et en jet inverse du dispositif d'inversion de poussée, à savoir lorsque les éléments déplaçables passent d'une position de fermeture à une position d'ouverture et vice versa.

Dans un mode de réalisation, le changement de mode du moteur électrique M est détecté par l'unité électronique de commande 10 de l'ETRAS par l'inversion de signe du courant aux bornes du moteur électrique M.

Il est à noter que ce changement a lieu pour deux valeurs de courant paliers déterminées différentes en jet direct et en jet inverse du dispositif d'inversion de poussée.

Ces valeurs de courant dépendent, notamment, du type d'inversion de poussée réalisée.

En référence à la figure 1, plus particulièrement, le boitier électronique de commande ETRAC comprend, en outre, une unité de contrôle de puissance 20 apte à commander les moteurs électriques M, grâce à un calculateur et un logiciel de pilotage associé.

Cette unité 20 est destinée principalement à gérer l'alimentation électrique des actionneurs électriques des éléments déplaçables de l'inverseur de poussée 2 et les moteurs électriques M.

Elle comprend, ainsi, au moins une sortie de commande 1,2,3 en tension alimentant le ou les moteurs électriques M, en fonction d'entrées de commande 12 de l'unité électronique de commande 10 transmettant des ordres de déploiement et fermeture des éléments déplaçables.

Plus précisément, cette unité de contrôle de puissance 20 est adaptée pour piloter des séquences de commande :
- d'un circuit électronique 100 de puissance du moteur M ;
- d'un circuit de dissipation d'énergie 110, en mode générateur du moteur M et/ou
- éventuellement, d'un circuit de récupération d'énergie de freinage, en mode générateur du moteur M.

De plus, selon l'invention, en référence à la figure 1, l'unité électronique de commande 10 est adaptée pour piloter la commande d'un circuit 200 électronique de freinage électrique d'urgence qui fait office de frein du moteur M, en remplacement de moyens de freinage mécanique à commande électrique ou autre de l'art antérieur.

Par circuit électronique de freinage électrique d'urgence, on entend un frein entièrement électronique, sans moyen mécanique agissant soit sur un élément du moteur M soit sur un arbre d'entraînement de ce dernier.

Un tel circuit sera décrit plus en détails par la suite en référence à la figure 1.

En référence à la figure 1, l'unité de contrôle de puissance 20 est apte à gérer l'alimentation électrique des dispositifs électriques concernés, reliées au réseau électrique de l'aéronef.

Dans ce cadre, le circuit de puissance 100 du moteur M présente au moins une entrée d'alimentation électrique S des dispositifs électriques concernés, reliées au réseau électrique de l'aéronef.

Dans le cas ou le réseau électrique de l'aéronef est à courant alternatif, l'unité de contrôle 20 de puissance assure le redressement et le filtrage de la tension d'entrée alternative par des moyens adaptés (non illustrés) pour délivrer une tension électrique continue au circuit de puissance 100. Le circuit de puissance 100 convertie la tension continue en une tension alternative adaptée au moteur M.

Elle transforme et adapte, ainsi, le signal électrique provenant du réseau avion pour fournir les signaux de tensions régulées afin d'alimenter le ou les moteurs électrique M des actionneurs A.

Plus particulièrement, comme visible sur la figure 1 dans un mode de réalisation, le circuit de puissance 100 du moteur M est un circuit dans lequel on fournit un signal en tension triphasée 1,2,3 de fréquence variable au moteur M.

La variation de la fréquence de tension appliquée au moteur M entraîne la variation de vitesse de ce dernier.

Ce circuit de puissance 100 comprend un ou plusieurs convertisseurs de puissance de type onduleur 120 délivrant le signal triphasé 1,2,3 de tensions.

Cet onduleur 120 régule les courants de phase 1, 2, 3 en imposant la fréquence du champ tournant et l'amplitude de courant dans le ou les moteurs M concernés.

Cet onduleur 120 est, classiquement, formé de couples de transistors IGBTs T (T3 à T8) et diodes D (D3 à D8) à roue libre, au nombre de six.

Par ailleurs, l'unité de commande 10 comprend des entrées de données (illustrées de façon non limitative par la référence 11) recevant des données en provenance d'un capteur de position du moteur M et/ou de l'actionneur A associé, d'un capteur de vitesse du moteur M et/ou de l'actionneur A associé, d'un détecteur d'état d'un actionneur A et une ou plusieurs sorties de données envoyant des données représentatives du statut du système d'inversion de poussée.

En plus des données en provenance des capteurs de position, l'unité de commande 10 peut recevoir, également, des données en provenance d'un détecteur de freinage du moteur M.

Bien évidemment, les données reçues et renvoyées ne sont pas limitées aux types de données présentées en exemple mais peuvent être tout type de données nécessaires à l'électronique de gestion de puissance et processus logique.

Par ailleurs, comme indiqué précédemment, l'unité de contrôle de puissance 20 comprend un circuit de dissipation d'énergie 105 générée dans le moteur M, en mode générateur de ce dernier, lors du freinage électrodynamique des actionneurs A.

Dans ce cadre, l'unité de contrôle de puissance 20 assure, la commande d'un élément de décharge 110 (R1) du ou des moteurs électriques M ou d'un autre dispositif de dissipation d'énergie.

Le freinage s'effectue par dissipation d'énergie générée dans le moteur M à travers une résistance R1 de dissipation en pilotant un hacheur de freinage sur la source de tension, de type transistor de commande T1.

Ceci permet notamment de ne pas perturber la qualité du réseau électrique de l'avion en y réinjectant l'énergie de freinage.

Chaque moteur M, lors du déplacement des éléments déplaçables vers leur position de fermeture et/ou vers leur position déployée en jet direct et en jet inversé, est piloté par des consignes de vitesse et/ou de couple transmises par l'unité de contrôle de puissance 20.

L'unité de contrôle de puissance 20 fournit les signaux de tension 1, 2,3 au moteur électrique M en conformité avec un profil de vitesse de moteur M prédéterminé par l'unité de commande 10 de l'ETRAS.

Le respect de ce profil de vitesse par le moteur M conditionne l'application d'un freinage électrique d'urgence du moteur M.

Dans ce cadre, le circuit d'alimentation électrique de l'unité de contrôle de puissance 20 comprend un système électrique de freinage électrique 200 d'urgence dont un premier mode de réalisation est illustré sur la figure 1.

Ce système 200 de freinage d'urgence comprend, en premier lieu, une boucle de contrôle de l'état de fonctionnement du moteur électrique M alimenté par l'unité de contrôle de puissance 20.

Pour surveiller la puissance du moteur M, l'unité de commande 10 reçoit, en entrée 11, du capteur dédié une information relative à la vitesse de rotation du moteur électrique M.

L'unité de commande 10 comprend des moyens 240 adaptés pour traiter ces données d'entrée et contrôler que la vitesse de rotation du moteur M mesurée, estimée ou déterminée est maintenue inférieure ou égale à une vitesse limite autorisée vseuil.

Ces moyens 240 sont associés au circuit électrique 200 de freinage électrique permettant à lui seul d'agir, de manière sélective et de façon instantanée, sur le moteur électrique M pour en freiner la rotation par application d'un couple de freinage électrique, lorsque la vitesse de rotation du moteur M dépasse la vitesse limite autorisée vseuil.

Ce circuit 200 électronique de freinage électrique est adapté pour suspendre toute commande du moteur M par les ordres de l'unité de commande 10 de l'ETRAS et freiner la survitesse du moteur M en la régulant à une vitesse minimum vmin prédéterminée et autorisée.

La vitesse limite autorisée vseuil peut être différente ou non en fonction de la position de l'actionneur entrainé par le moteur M sur sa course nominale.

Ainsi, la valeur de la vitesse limite autorisée vseuil peut varier en fonction de la position de l'actionneur entrainé par le moteur M dans son déplacement vers sa position de fermeture et/ou vers sa position déployée en jet direct et en jet inversé, lorsque la survitesse du moteur M est identifiée.

Le circuit électronique 200 de freinage électrique comprend au moins un dispositif de dissipation d'énergie électrique 220 monté, en série, entre un commutateur 230 et un pont redresseur 210 dont l'entrée d'alimentation en tension est formée de chacune des phases 210 du signal de tension triphasé 1,2,3 du moteur M.

Ce redresseur est adapté pour redresser le signal en tension du moteur M et dissiper la puissance de ce dernier dans le dispositif de dissipation d'énergie électrique 220.

Dans une variante de réalisation non limitative, le redresseur est un montage à commutation naturelle notés PDi, i étant le nombre de phases redressées.

Dans un exemple de réalisation non limitatif, i est égale à 3 et ce pont redresseur 210 PD3 est à diodes.

Le commutateur 230 électrique pilotable est, quant à lui, apte à être commandé par une ligne de commande 202 provenant de l'unité de commande 10 de l'ETRAS via les moyens de commande 240 en fonction de la vitesse du moteur M.

L'unité de commande 10 est adaptée pour suspendre l'alimentation sur le circuit de puissance 100 lorsque la vitesse du moteur M est supérieure à la vitesse vseuil considérée.

Le commutateur 230 peut être un thyristor qui restera conducteur jusqu'à la mise hors tension du circuit en cas de défaut de survitesse du moteur M.

Ainsi, lorsque la vitesse du moteur M est déterminée comme une survitesse par les moyens de contrôle 240, un signal de commande de fermeture est transmis au commutateur 230 qui se ferme et le redresseur 210 prélève, par les trois lignes 201, les trois phases de tension 1, 2, 3 du moteur M qui constitue la source en tension 201 du circuit de freinage électrique.

L'énergie de freinage est, dès lors, dirigée vers le dispositif de dissipation d'énergie électrique 220 du circuit 200 électrique de freinage électrique d'urgence.

Ce dispositif est une résistance R2 de dissipation.

Le circuit de freinage électrique 200 est adapté pour dissiper la puissance du moteur M de manière à réguler la vitesse du moteur M pour la conduire vers la vitesse vmin de freinage et à diriger l'actionneur en fin de course sans heurt mécanique sur la butée de fin de course correspondante et sans dégradation mécanique de l'actionneur A.

La butée de fin de course de l'actionneur est dimensionnée pour arrêter le moteur M après qu'il est atteint la vitesse vmin de freinage.

Dans un autre mode de réalisation, le circuit de dissipation d'énergie 105 peut être remplacé par un circuit de récupération de l'énergie de freinage du moteur électrique M lorsqu'il est en mode générateur lors du déplacement des éléments déplaçables vers leur position de fermeture et/ou vers leur position déployée en jet direct et en jet inversé. Ce circuit comprend, notamment, un ou plusieurs dispositifs de stockage d'énergie de type capacités ou ultracapacités.

Un procédé de mise en oeuvre du système de commande selon l'invention est le suivant.

Il a été choisi, de façon non limitative, d'illustrer le procédé dans le cadre du moteur M en mode générateur.

En fin de course d'un élément déplaçable du dispositif d'inversion de poussée, lors de son déplacement en jet direct ou en jet inversé, lorsque le moteur M passe en mode générateur, on agit avec des stratégies bien déterminées au moyen du circuit de commande et d'alimentation électrique de l'unité de commande de puissance 20, pour contrôler avec précision le déplacement du moteur M et donc de l'élément déplacé correspondant.

L'unité de commande de puissance 20 pilote l'onduleur 120 pour qu'il fasse fonctionner le moteur électrique M en mode générateur et lui fixe une consigne de vitesse.

Les détecteurs d'état et les capteurs adaptés permettent d'analyser le déplacement de l'élement déplaçable du dispositif d'inversion de poussée et la vitesse de rotation du moteur électrique M associé.

Tant que la vitesse de rotation du moteur électrique M n'est pas supérieure à la vitesse limite Vseuil liée à la position de l'actionneur A associé au moteur M, alors l'unité de commande de puissance 20 commande le circuit de dissipation de l'énergie 105 du moteur M dans la résistance de décharge R1.

Dans une variante de réalisation, elle peut commander le circuit de stockage de l'énergie de freinage du moteur M dans un dispositif de stockage d'énergie.

Si la vitesse de rotation du moteur électrique M est supérieure à la vitesse limite prédéterminée vseuil, alors l'unité de commande 10 commande le circuit de freinage électrique d'urgence pour réguler la vitesse du moteur M.

En effet, lorsque la vitesse du moteur dépasse la vitesse seuil maximale vseuil, le fonctionnement du moteur est considéré comme défectueux.

L'unité de commande 10 commande le changement de la position du commutateur 230 qui se déplace de façon à mettre en circuit, l'élément de dissipation R2 220.

On dissipe la puissance du moteur M en survitesse dans l'élément R2 et on produit un couple de freinage électrique adapté pour atteindre une vitesse de moteur M correspondant à la vitesse minimale prédéterminée vmin, de manière à amener l'actionneur A associé au moteur M en fin de course sans heurt dynamique sur sa butée de course.

Le fonctionnement du circuit 200 de freinage électrique permet de palier la perte de contrôle du moteur M.

L'unité de contrôle de puissance 20 stoppe tout ordre de commande par l'unité de commande 10 de l'ETRAS du moteur M défectueux et instantanément réduit la vitesse du moteur M à la valeur vmin en freinant le moteur M.

On comprend donc que le système est très sécuritaire, sans alourdir l'inverseur de poussée.

Par ailleurs, aucune interaction mécanique d'un frein avec les éléments mécaniques du moteur à pleine vitesse n'étant opéré, toute usure du moteur est évitée par ce freinage électrique d'urgence.

De plus, un tel système de commande permet d'atténuer les vibrations mécaniques lors des déclenchements en survitesse et évite les défaillances mécaniques.

L'homme de l'art appréciera, de plus, par rapport aux systèmes de commande des dispositifs électriques de la nacelle de l'art antérieur, un système de commande permettant de réduire l'endommagement des actionneurs.

Les préceptes de l'invention sont applicables bien entendu à l'actionnement d'un capot d'inverseur de poussée mais plus généralement à l'actionnement de tous types d'éléments déplaçables sur une nacelle d'aéronef.

## Revendications

1. Système de commande pour inverseur de poussée à éléments déplaçables, le système de commande comprenant au moins un organe électromécanique d'actionnement dudit élément déplaçable, une unité (M) d'entraînement électrique dudit organe électromécanique d'actionnement, une unité de commande (10) et une unité de contrôle de puissance (20) adaptée pour commander l'unité (M) d'entraînement électrique pour déplacer l'élément déplaçable vers une position de fermeture et/ou vers une position déployée en jet direct et en jet inversé **caractérisé en ce que** le système de commande comprend un circuit (200) électronique de freinage électrique pour freiner l'unité (M) d'entraînement électrique, en cas de survitesse de cette dernière lors du déplacement de l'élément déplaçable vers la position de fermeture et/ou vers la position déployée.

2. Système selon la revendication 1 dans lequel l'unité (10) de commande pilote le circuit (200) électronique de freinage électrique lorsque la vitesse de l'unité (M) d'entraînement électrique est supérieure à une vitesse seuil, en mode générateur ou moteur de l'unité (M) d'entraînement électrique.

3. Système selon la revendication 2 dans lequel la valeur de la vitesse seuil est fonction de la position de l'organe électromécanique d'actionnement entraîné par l'unité (M) d'entraînement électrique dans son déplacement vers la position de fermeture et/ou vers la position déployée.

4. Système selon la revendication 1 dans lequel le circuit électronique de freinage électrique suspend toute commande de l'unité (M) d'entraînement électrique et régule la vitesse de l'unité (M) d'entraînement électrique de manière à atteindre une consigne de vitesse minimale prédéterminée.

5. Système selon l'une des revendications 1 à 4 comprenant, en outre, une ou plusieurs butées de fin de course pour l'organe électromécanique d'actionnement dimensionnées pour stopper l'organe électromécanique d'actionnement après que l'unité (M) d'entraînement électrique est atteint la consigne de vitesse minimale.

6. Système selon la revendication 4 dans lequel le circuit électronique de freinage électrique est commandé tant que la consigne de vitesse minimale n'est pas atteinte par l'unité (M) d'entraînement électrique.

7. Système selon l'une des revendications 1 à 6 dans lequel le circuit (200) électronique de freinage électrique comprend au moins un dispositif (220) de dissipation d'énergie électrique monté, en série, avec un commutateur (240) à deux états, l'un des deux états étant adapté pour connecter l'unité (M) d'entraînement électrique au dispositif (220) de dissipation d'énergie et un redresseur (210) dont la tension d'entrée est formée du signal de sortie d'un circuit (100) de puissance de l'unité d'entraînement électrique.

8. Système selon la revendication 7 dans lequel le dispositif (220) de dissipation d'énergie électrique est une résistance de puissance.

9. Système selon la revendication 7 dans lequel le redresseur (210) est un montage à pont de diode à commutation naturelle.

10. Nacelle comprenant au moins un élément déplaçable et un système de commande selon l'une des revendications précédentes.

## Patentansprüche

1. Steuersystem für eine Schubumkehr mit verfahrbaren Elementen, wobei das Steuersystem zumindest ein elektromechanisches Betätigungsglied für das besagte verfahrbare Element, eine elektrische Antriebseinheit (M) für das besagte elektromechanische Betätigungsglied, eine Steuereinheit (10) und eine Leistungssteuereinheit (20) umfasst, die ausgeführt ist, um die elektrische Antriebseinheit (M) zum Verfahren des verfahrbaren Elements in eine Schließposition und/ oder in eine ausgefahrene Position im Direktstrahl oder im Umkehrstrahl anzusteuern, **dadurch gekennzeichnet, dass** das Steuersystem einen elektronischen Elektrobrems-Schaltkreis (200) umfasst, um die elektrische Antriebseinheit (M) im Falle einer Übergeschwindigkeit von letzterer beim Verfahren des verfahrbaren Elements in die Schließposition und/ oder in die ausgefahrene Position zu bremsen.

2. System nach Anspruch 1, wobei die Steuereinheit (10) den elektronischen Elektrobrems-Schaltkreis (200) ansteuert, wenn die Geschwindigkeit der elektrischen Antriebseinheit (M) im Generatormodus oder Motormodus der elektrischen Antriebseinheit (M) höher ist, als ein Geschwindigkeitsgrenzwert.

3. System nach Anspruch 2, wobei der Wert für den Geschwindigkeitsgrenzwert von der Position des elektromechanischen Betätigungsglieds abhängt, das von der elektrischen Antriebseinheit (M) beim Verfahren in die Schließposition und/ oder in die ausgefahrene Position angetrieben wird.

4. System nach Anspruch 1, wobei der elektronische Elektrobrems-Schaltkreis alle Ansteuerungen der elektrischen Antriebseinheit (M) aussetzt und die Geschwindigkeit der elektrischen Antriebseinheit (M) regelt, sodass ein vorbestimmter Sollwert für die Mindestgeschwindigkeit erreicht wird.

5. System nach einem der Ansprüche 1 bis 4, das darüber hinaus einen oder mehrere Endanschläge für das elektromechanische Betätigungsglied umfasst, die bemessen sind, um das elektromechanische Betätigungsglied zu stoppen, nachdem die elektrische Antriebseinheit (M) den Sollwert für die Mindestgeschwindigkeit erreicht hat.

6. System nach Anspruch 4, wobei der elektronische Elektrobrems-Schaltkreis angesteuert wird, solange der Sollwert für die Mindestgeschwindigkeit von der elektrischen Antriebseinheit (M) nicht erreicht wird.

7. System nach einem der Ansprüche 1 bis 6, wobei der elektronische Elektrobrems-Schaltkreis (200) zumindest eine Vorrichtung (220) zum Ableiten der elektrischen Energie umfasst, die in Reihe mit einem Schalter (240) mit zwei Schaltzuständen geschaltet ist, wobei sich einer der beiden Schaltzustände dazu eignet, um die elektrische Antriebseinheit (M) mit der Vorrichtung (220) zum Ableiten der elektrischen Energie und einem Gleichrichter (210) zu verbinden, dessen Eingangsspannung aus dem Ausgangssignal eines Leistungskreises (100) der elektrischen Antriebseinheit gebildet wird.

8. System nach Anspruch 7, wobei die Vorrichtung (220) zum Ableiten der elektrischen Energie ein Leistungswiderstand ist.

9. System nach Anspruch 7, wobei der Gleichrichter (210) eine Dioden-Brückenschaltung mit natürlicher Kommutierung ist.

10. Gondel, zumindest ein verfahrbares Element und ein Steuersystem nach einem der vorherigen Ansprüche umfassend.

## Claims

1. A control system for a thrust reverser with displaceable elements, the control system comprising at least one electromechanical actuating member of said displaceable element, an electric drive unit (M) of said electromechanical actuating member, a control unit (10) and a power control unit (20) adapted to control the electric drive unit (M) for moving the displaceable element towards a closed position and/or a deployed position in direct jet and reverse jet modes, **characterized in that** the control system comprises an electric braking electronic circuit (200) for braking the electric drive unit (M), in case of over-speed of the latter during the movement of the displaceable element towards the closed position and/or the deployed position.

2. The system according to claim 1 wherein the control unit (10) drives the electric braking electronic circuit (200) when the speed of the electric drive unit (M) is greater than a threshold speed, in generator or motor mode of the electric drive unit (M).

3. The system according to claim 2 wherein the value of the threshold speed is function of the position of the electromechanical actuating member driven by the electric drive unit (M) in its movement towards the closed position and/or the deployed position.

4. The system according to claim 1 wherein the electric braking electronic circuit suspends all control of the electric drive unit (M) and regulates the speed of the electric drive unit (M) so as to reach a set point of a predetermined minimum speed.

5. The system according to any of claims 1 to 4 further comprising one or more end-of-travel-stop(s) for the electromechanical actuating member which is/are dimensioned to stop the electromechanical actuating member after the electric drive unit (M) has reached the set point of the minimum speed.

6. The system according to claim 4 wherein the electric braking electronic circuit is controlled as long as the set point of the minimum speed is not reached by the electric drive unit (M).

7. The system according to any of claims 1 to 6 wherein the electric braking electronic circuit (200) comprises at least one electric energy dissipation device (220) mounted in series with a two-state switch (240), one of the two states being adapted to connect the electric drive unit (M) to the energy dissipation device (220) and a rectifier (210) whose input voltage is formed from the output signal of a power circuit (100) of the electric drive unit.

8. The system according to claim 7 wherein the electric energy dissipation device (220) is a power resistance.

9. The system according to claim 7 wherein the rectifier (210) is a naturally-switched diode bridge assembly.

10. A nacelle comprising at least one displaceable element and a control system according to any of the preceding claims.
